# EUROPÄISCHE PATENTSCHRIFT

(11) **EP 4 031 699 B1**
(45) Veröffentlichungstag und Bekanntmachung des Hinweises auf die Patenterteilung: **17.07.2024**
(21) Anmeldenummer: 20775233.8
(22) Anmeldetag: 16.09.2020
(51) Int. Cl.: D04B 1/22

(54) **VERFAHREN ZUM STRICKEN VON EDELMETALLNETZEN**
METHOD OF KNITTING OF PRECIOUS METAL NETTING
PROCÉDÉ DE TRICOTAGE DE FILETS EN MÉTAL PRÉCIEUX

(30) Priorität: 17.09.2019 EP 19197709
(43) Veröffentlichungstag der Anmeldung: 27.07.2022
(73) Patentinhaber: Umicore AG & Co. KG, 63457 Hanau-Wolfgang (DE)
(72) Erfinder: BORN, Dirk, 63505 Langenselbold (DE); KOENIGS, Dietmar, 63571 Gelnhausen (DE)
(86) Internationale Anmeldenummer: PCT/EP2020/075802
(87) Internationale Veröffentlichungsnummer: WO 2021/052980

(56) Entgegenhaltungen:
- EP-A1- 2 960 362
- DE-A1- 2 749 061
- US-A- 5 266 293
- US-A- 5 268 157

## Beschreibung

Diese Erfindung betrifft ein Verfahren zur Herstellung von Edelmetallnetzen, wie es für die katalytische Oxidation von Ammoniak verwendet wird.

Edelmetallkatalysierte Gasreaktionen wie die Oxidation von Ammoniak mit Luftsauerstoff in der Salpetersäureproduktion (Ostwald-Verfahren) oder die Umsetzung von Ammoniak mit Methan in Anwesenheit von Sauerstoff zu Blausäure (Andrussow-Verfahren) haben seit langem erhebliche industrielle Bedeutung erlangt, werden durch sie doch im großtechnischen Maßstab Basischemikalien für die chemische Industrie und für die Düngemittelproduktion bereitgestellt (Andreas Jess, Peter Wasserscheid: Chemical Technology (Wiley-VCH Verlag, Weinheim 2013) Kapitel 6.4.)

Kern dieser heterogen katalysierten Gasreaktionen sind Edelmetallkatalysatoren in Form gasdurchlässiger räumlicher Gebilde, an bzw. in denen die Reaktion abläuft. Hierbei haben sich seit geraumer Zeit Edelmetallnetze in Form von Geweben (DE4028916C2) oder Gestricken (EP0364153B1, DE4206199C1, US5268157A) aus feinen Edelmetalldrähten durchgesetzt. Die Edelmetalldrähte bestehen überwiegend aus Platin, Rhodium oder aus Legierungen dieser Metalle mit anderen Edel- oder Unedelmetallen. Typisch sind hierbei Platin-Rhodium-Legierungen mit 4 bis 12 Gew.-% Rhodium und Platin-Palladium-Rhodium-Legierungen mit 4 bis 12 Gew.-% Palladium und Rhodium.

Die Edelmetallnetze werden dabei üblicherweise in einem Strömungsreaktor in einer Ebene senkrecht zur Strömungsrichtung des Gasgemisches angeordnet, um als Katalysatornetze eingesetzt zu werden. Auch kegelförmige Anordnungen sind bekannt. Es werden zweckmäßigerweise meist mehrere Katalysatornetze hintereinander angeordnet und zu einem Katalysatornetzstapel zusammengefasst.

Üblicherweise sind strömungsabwärts des Katalysatornetzstapels nachgeschaltete Platinauffangnetze, sogenannte Getternetze, angeordnet, die der Rückgewinnung von aus den Katalysatornetzen in Form von gasförmigen Oxiden konvektiv mit dem Reaktionsgasstrom ausgetragenem Platin und Rhodium dienen. Diese Getternetze enthalten meist Drähte aus Palladium oder Palladiumlegierungen, wie z. B. Palladium-Nickel-Legierungen mit 2 bis 15 Gew.-% Nickel, Palladium-Kupfer-Legierungen mit 2 bis 15 Gew.-% Kupfer und Palladium-Nickel-Kupfer-Legierungen mit 2 bis 15 Gew.-% Nickel und Kupfer. Sowohl zwischen dem Katalysatornetzstapel und dem ersten Getternetz als auch zwischen den Getternetzen befinden sich üblicherweise Trennnetze aus Hochtemperaturstahl, die ein Zusammensintern der Netze verhindern sollen.

Die Erfindung ist für Katalysator- und Getternetze anwendbar. Im weiteren wird deshalb von Edelmetallnetzen gesprochen, wobei diese Bezeichnung Katalysator- und Getternetze umfassen soll.

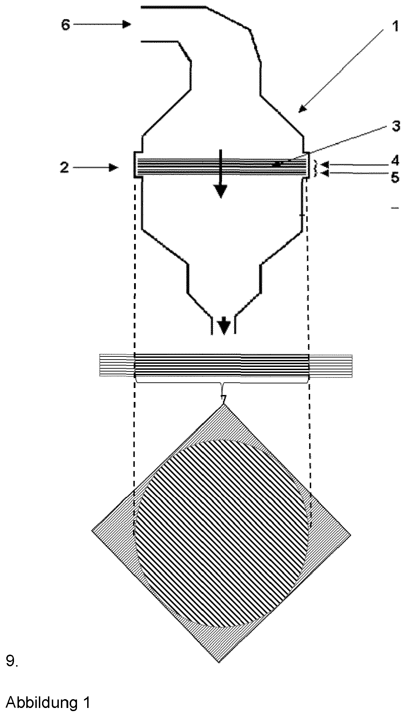

Abbildung 1 zeigt am Beispiel der katalytischen Ammoniakoxidation schematisch den Reaktor mit dem darin verbauten Netzstapel, dessen Funktion im Folgenden beschrieben wird:
In der Reaktionsebene (2) des Strömungsreaktors (1) ist in einer Ebene senkrecht zur Strömungsrichtung der Netzstapel (3), der aus mehreren hintereinander liegenden Katalysatornetzen (4) und nachgeschalteten Trenn- und Getternetzen (5) besteht, angeordnet. Dieser Netzstapel mit einem Mindestnetzdurchmesser (7) wird durch Einklemmen in seiner Position gehalten.

Das Ammoniak-Luftsauerstoffgemisch (mit einem Ammoniakgehalt von 9 - 13 Vol.-%) (6) durchströmt unter atmosphärischem oder erhöhtem Druck den Netzstapel (3), wobei im Eintrittsbereich die Zündung des Gasgemisches erfolgt und die Verbrennungsreaktion zu Stickstoffmonoxid (NO) und Wasser die gesamte Reaktionszone erfasst:

4NH₃ + 5 O₂ (Luft) --> 4 NO + 6 H₂O

Das NO im abströmenden Reaktionsgasgemisch reagiert in der Folge mit dem überschüssigen Luftsauerstoff zu NO₂:

2 NO + O₂ --> 2 NO₂

Das NO₂ reagiert wiederum in einer nachgeschalteten Absorption mit Wasser zu Salpetersäure, welche etwa der Düngemittelproduktion zugeführt wird:

3 NO₂ + H₂O --> 2 HNO₃ + NO

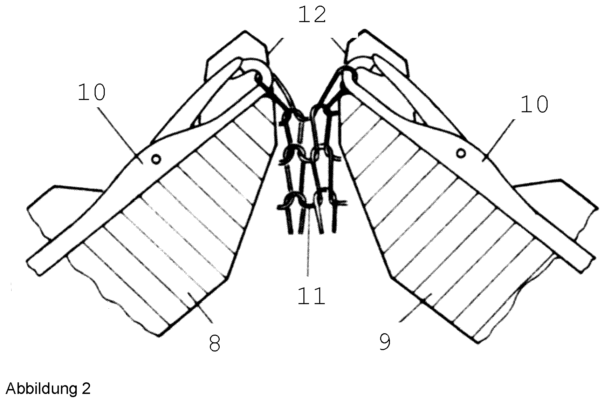

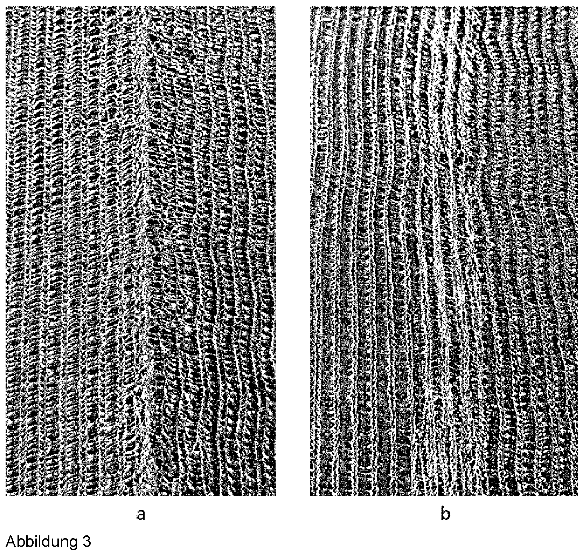

Die Herstellung von Edelmetallnetzen auf der Flachstrickmaschine wird in US5268157A beschrieben (aufgrund der Übersetzung aus dem Englischen "flat bed knitting machine" ist der Begriff "Flachbettstrickmaschine" im Deutschen ebenfalls üblich). Der Aufbau der Flachstrickmaschine wird in Abbildung 2 verdeutlicht. Die Flachstrickmaschine besitzt ein vorderes (8) und ein hinteres Nadelbett (9), in welche die Nadeln (10) verbaut sind. Die Nadeln durchlaufen je nach Programmierung der Maschine unterschiedliche Stellungen. Die Programmierung gibt demnach die Struktur des Gestricks vor. Eine Besonderheit der Flachstricktechnik gegenüber anderen gewebebildenden Maschinen ist, dass man synchron auf dem vorderen als auch auf dem hinteren Nadelbett unabhängig voneinander Gestricke bilden kann (Einbettware). Darüber hinaus können Abstandsgestricke (Zweibettware) gebildet werden, bei denen der Faden im Wechsel vorne und hinten Maschen oder Fang bildet. Das Gestrick wird nach unten zwischen den beiden Nadelbetten abgestrickt (11). Dies geschieht durch sukzessives Abschlagen der einzelnen geformten Maschen über die Abschlagsstellung und Abschlagstegkante (12). Die Edelmetallnetzherstellung auf der Flachstrickmaschine hat sich in vielen Bereichen der Technik bewährt (EP2960362 A1, DE2749061 A1).

Gestrickte Edelmetallnetze besitzen gegenüber gewebten Edelmetallnetzen eine Reihe von Vorteilen, weswegen sie heute im industriellen Einsatz bevorzugt werden. Zum einen bietet die Stricktechnik die Möglichkeit einer hohen Flexibilität in Hinblick auf Strickmuster, verwendete Drahtstärken und resultierendes Flächengewicht. Zum anderen lassen sich die Edelmetallgestricke ökonomischer herstellen, da bei der Stricktechnik kürzere Rüstzeiten als bei der Webtechnik anfallen. Dies bedingt insbesondere eine erheblich reduzierte Edelmetallbindung in der Produktion. Verwendet werden hierfür in der Regel Flachstrickmaschinen, auf denen Edelmetallnetze beliebiger Länge hergestellt werden können. Die maximale Breite ist jedoch normalerweise durch die Breite des Strickbetts vorgegeben. Für breitere Edelmetallnetze müssen mehrere Edelmetallnetze über eine Schweißnaht verbunden werden, wie es derzeit bei Drahtgeweben üblich ist (www.diedrahtweber.com/de/gewebe-und-ausruestung/fertigungsprozesse; heruntergeladen am 1.9.2020; Gewebebroschüre der Dorstener Drahtwerke; heruntergeladen am 1.9.2020). Diese Schweißnähte, in der Regel als Hammerschweißnaht ausgeführt, beeinflussen aufgrund ihrer Gasundurchlässigkeit den Umsatz negativ und stellen zudem einen mechanischen Schwachpunkt des Edelmetallnetzes dar. Beim Hammerschweißen werden die beiden zu verbindenden Edelmetallnetze über meist mehrere Maschenreihen übereinandergelegt und durch Hämmern unter gleichzeitiger Erhitzung verbunden. Diese Schweißnähte sind auch nach Beendigung des Herstellprozesses sichtbar. **Fehler! Verweisquelle konnte nicht gefunden werden,** zeigt ein erfindungsgemäßes Edelmetallnetz mit erkennbarer Stricknaht (a) im Vergleich zu einem Edelmetallnetz entsprechend dem Stand der Technik, welches den Bereich der Hammerschweißnaht aufzeigt. Wie zu erkennen ist, ist das Edelmetallnetz im Bereich der Hammerscheißnaht stark verdichtet, die Gewebestruktur zusammengedrückt. Des Weiteren ist das Schweißen mit höherem technischem Aufwand und zusätzlichen Produktionskosten verbunden.

Der vorliegenden Erfindung lag daher die Aufgabenstellung zugrunde, schweißnahtfreie Edelmetallnetze herzustellen, welche breiter als das Strickbett der Flachstrickmaschine sind und in einem Stück gestrickt werden können.

Diese Aufgabe wird gelöst durch ein Verfahren zur Herstellung von Edelmetallnetzen auf Flachstrickmaschinen, welches die Schritte:
- Bereitstellen von Edelmetalldraht und
- Stricken eines Edelmetallnetzes
beinhaltet, wobei simultan auf dem vorderen und hinteren Nadelbett der Flachstrickmaschine jeweils ein Edelmetallnetz gestrickt wird, und diese beiden Edelmetallnetze durch verbindende Strickmaschen an einer Seite verbunden werden.

In einer bevorzugten Ausführungsvariante des Verfahrens wird das Edelmetallnetz, welches auf dem vorderen Nadelbett gestrickt wird, aus Draht gleicher Zusammensetzung gestrickt wie das Edelmetallnetz, welches auf dem hinteren Nadelbett gestrickt wird.

In einer Ausführungsvariante werden beide Edelmetallnetze in Form eines Halbkreises gestrickt, die dann auf der geraden Kante verbunden werden, so dass das Produkt ein rundes Edelmetallnetz beinhaltet.

In einer Ausführungsvariante besteht der Draht aus Platin oder einer Platinlegierung. Bevorzugt wird als Platinlegierung eine Legierung mit mindestens 75 Gew.-% Platin gewählt.

In einer weiteren Ausführungsvariante besteht der Draht aus Palladium- oder einer Palladiumlegierung. Bevorzugt wird als Palladiumlegierung eine Legierung mit mindestens 75 Gew.-% Palladium verwendet.

Das mit dem erfindungsgemäßen Verfahren hergestellte Netz wird zur katalytischen Oxidation von Ammoniak eingesetzt, welches die folgenden Schritte umfasst:
- Bereitstellen von Edelmetallnetzen hergestellt nach dem erfindungsgemäßen Verfahren
- Einbau eines Netzstapels der Edelmetallnetze enthält, die mithilfe des erfindungsgemäßen Verfahrens hergestellt wurden, in einen Strömungsreaktor (1)
- Zuführung eines Gases beinhaltend Ammoniak und Sauerstoff bei einer Temperatur im Strömungsreaktor zwischen 500°C und 1300°C und einem Druck zwischen 0,1 MPa und 1,4 MPa.

Im Folgenden wird die Erfindung anhand eines Beispiels beschrieben:

### Beispiel

Auf einer Flachstrickmaschine (Fa. Stoll, Typ CMS) mit einer Strickbettbreite von ca. 2,4 m (96 Inch) wird auf dem vorderen und hinteren Strickbett jeweils ein Edelmetallnetz mit einer Breite von 2,3 m gestrickt und auf einer Seite durch entsprechende Fadenführung verbunden. Somit entsteht ein Edelmetallnetz von 4,6 m Breite und beliebiger Länge.

Somit können durch Anwendung des erfindungsmäßigen Verfahrens schweißnahtfreie Edelmetallnetze bis zu einer Breite, die der doppelten Strickbettbreite entspricht, gestrickt werden.

### Vergleichsbeispiel

Auf einer Flachstrickmaschine mit einer Strickbettbreite von ca. 2,4 m (96 Inch) wird auf dem vorderen und hinteren Strickbett jeweils ein Edelmetallnetz mit einer Breite von 2,3 m gestrickt.

Die beiden Edelmetallnetze werden anschließend an einer Seite miteinander durch Verschweißen verbunden, um ein Edelmetallnetz mit einem Edelmetallnetzdurchmesser von 4,6 m darstellen zu können.

Das erfindungsgemäße Beispiel und das Vergleichsbeispiel führt zu einem Edelmetallnetz gleichen Durchmessers, jedoch erfordert das Vergleichsbeispiel einen weiteren Fertigungsschritt (Verschweißung). Außerdem weist das Produkt des Vergleichsbeispiels im Unterschied zum erfindungsgemäßen Beispiel eine Schweißnaht auf, die quer über die Reaktionszone verläuft und aufgrund ihrer Struktur die Gasdurchlässigkeit reduziert und damit die katalytische Wirkung negativ beeinflusst. Zudem stellt sie eine mechanische Schwachstelle dar, die insbesondere während des Edelmetallnetzwechsels zu Materialfehlern führen kann.

### Legende zu Abbildung 1:

1 Strömungsreaktor
2 Reaktionsebene
3 Netzstapel
4 Edelmetallnetze
5 Getter- und Trennnetze
6 Reaktionsgas
7 Mindestnetzdurchmesser

### Legende zu Abbildung 2:

8 vorderes Nadelbett
9 hinteres Nadelbett
10 Nadeln
11 abgestricktes Produkt
12 Abschlagstegkante

## Patentansprüche

1. Verfahren zur Herstellung von Edelmetallnetzen (4) auf Flachstrickmaschinen, die Schritte enthaltend:
• Bereitstellen von Edelmetalldraht
• Stricken eines Edelmetallnetzes (4)
**dadurch gekennzeichnet, dass** simultan auf dem vorderen (8) und hinteren (9) Nadelbett der Flachstrickmaschine jeweils ein Edelmetallnetz gestrickt wird, und diese beiden Edelmetallnetze durch verbindende Strickmaschen an einer Seite verbunden werden.

2. Verfahren gemäß Anspruch 1, **dadurch gekennzeichnet, dass** das Edelmetallnetz, welches auf dem vorderen Nadelbett (8) gestrickt wird, aus Draht gleicher Zusammensetzung gestrickt wird wie das Edelmetallnetz, welches auf dem hinteren Nadelbett (9) gestrickt wird.

3. Verfahren gemäß Anspruch 1 und / oder 2, **dadurch gekennzeichnet, dass** beide Edelmetallnetze in Form eines Halbkreises gestrickt werden, die dann auf der geraden Kante verbunden werden, so dass das Produkt ein rundes Edelmetallnetz (4) beinhaltet

4. Verfahren gemäß einem oder mehreren der Ansprüche 1 bis 3, **dadurch gekennzeichnet, dass** der verwendete Draht aus Platin oder einer Platinlegierung besteht.

5. Verfahren gemäß Anspruch 4, **dadurch gekennzeichnet, dass** der Draht aus Platinlegierung mit mindestens 75 Gew.-% Platin besteht

6. Verfahren gemäß einem oder mehreren der Ansprüche 1 bis 3, **dadurch gekennzeichnet, dass** der verwendete Draht aus Palladium- oder einer Palladiumlegierung besteht

7. Verfahren gemäß Anspruch 4, **dadurch gekennzeichnet, dass** der Draht aus Palladiumlegierung mit mindestens 75 Gew.-% Palladium besteht

## Claims

1. Method for producing noble metal nets (4) on flat-bed knitting machines, involving the steps of:
• providing noble metal wire
• knitting a noble metal net (4)
**characterized in that** a noble metal net is knitted simultaneously on each of the front (8) and rear (9) needle beds of the flat-bed knitting machine, and these two noble metal nets are connected at one side by connecting knit stitches.

2. Method according to claim 1, **characterized in that** the noble metal net which is knitted on the front needle bed (8) is knitted from wire of the same composition as the noble metal net which is knitted on the rear needle bed (9).

3. Method according to claim 1 and/or 2, **characterized in that** the two noble metal nets are knitted in the form of a semicircle, which are then connected at the straight edges so that the product contains a round noble metal net (4).

4. Method according to one or more of claims 1 to 3, **characterized in that** the wire used consists of platinum or a platinum alloy.

5. Method according to claim 4, **characterized in that** the wire consists of platinum alloy having at least 75 wt.% platinum.

6. Method according to one or more of claims 1 to 3, **characterized in that** the wire used consists of palladium or a palladium alloy.

7. Method according to claim 4, **characterized in that** the wire consists of palladium alloy having at least 75 wt.% palladium.

## Revendications

1. Procédé pour la fabrication de filets en métal précieux (4) sur des tricoteuses rectilignes, contenant les étapes consistant à :
• fournir un fil de métal précieux
• tricoter un filet en métal précieux (4)
**caractérisé en ce que** respectivement un filet en métal précieux est tricoté simultanément sur la fonture avant (8) et sur la fonture arrière (9) de la tricoteuse rectiligne, et lesdits deux filets en métal précieux sont reliés par des mailles de tricot de liaison sur un côté.

2. Procédé selon la revendication 1, **caractérisé en ce que** le filet en métal précieux qui est tricoté sur la fonture avant (8) est tricoté à partir d'un fil de même composition que celui du filet en métal précieux qui est tricoté sur la fonture arrière (9).

3. Procédé selon les revendications 1 et/ou 2, **caractérisé en ce que** les deux filets en métal précieux sont tricotés en forme de demi-cercle, lesquels sont ensuite reliés sur le bord droit, de sorte que le produit comprend un filet en métal précieux (4) rond.

4. Procédé selon l'une ou plusieurs des revendications 1 à 3,
**caractérisé en ce que** le fil utilisé est constitué de platine ou d'un alliage de platine.

5. Procédé selon la revendication 4, **caractérisé en ce que** le fil est constitué d'un alliage de platine comportant au moins 75 % en poids de platine.

6. Procédé selon l'une ou plusieurs des revendications 1 à 3,
**caractérisé en ce que** le fil utilisé est constitué de palladium ou d'un alliage de palladium.

7. Procédé selon la revendication 4, **caractérisé en ce que** le fil est constitué d'un alliage de palladium comportant au moins 75 % en poids de palladium.
